# EUROPEAN PATENT APPLICATION

(11) **EP 4 844 965 A1**
(43) Date of publication of application: **25.11.2026**
(21) Application number: 26177768.4
(22) Date of filing: 11.05.2026
(51) Int. Cl.: H02G 3/32, H02G 15/007

(54) **PROTECTION MANAGEMENT FOR SOLAR CABLE CONNECTIONS**

(30) Priority: 19.05.2025 US 202563808127 P; 28.11.2025 US 202563926988 P; 30.03.2026 US 202619633073
(71) Applicant: HellermannTyton Corporation, Milwaukee, WI 53224 (US)
(72) Inventor: Klos, Scott G., Grafton, Wisconsin (US); Zick, Jonathan, Waukesha, Wisconsin (US); Cors, Mark W., St. Francis, Wisconsin (US)
(74) Representative: Hernandez, Yorck

(57) **Abstract**

Disclosed are fixings for managing solar cable connections that are configured to route and protect photovoltaic cables and connectors within a solar installation. The fixing includes an elongated portion having a first cable support and a second cable support spaced apart to retain cables while limiting their bend radii. A receiver portion is defined between the cable supports to receive a cable connector. First and second stop portions extend from the elongated portion to space the cable connector from the cable supports. This arrangement maintains predetermined separation distances to provide strain relief and ensure the cables do not bend at sharp angles upon exiting the connector, thereby mitigating cable and/or weatherproof seal fatigue and failure.

## Description

### INCORPORATION BY REFERENCE

This application claims the benefit of U.S. Provisional Application No. 63/808,127, filed May 19, 2025, and the benefit of U.S. Provisional Application No. 63/926,988, filed November 28, 2025, the disclosures of which are incorporated herein by reference.

### BACKGROUND

A photovoltaic (PV) system may include one or more panels (e.g., solar panels) of photovoltaic cells mounted on a support structure. In some applications, the solar panels are fixed in place on the support structure, while in other applications, the support structure may include a "solar tracker" that is configured to orient the solar panels towards the Sun. An example solar tracker support structure includes one or more column supports and a torque tube that is rotationally mounted on the column support. One or more solar panels are mounted on the torque tube, and the rotation of the torque tube enables the solar tracker to orient the solar panels.

The electrical output of the solar panels is transferred to the electrical grid or an electrical storage device (e.g., battery) through one or more PV cables (electrical cables). Weatherproof cable connectors may be used to connect PV cables together to establish electrical connections between adjacent solar panels and provide home-run connections to electrical power distribution systems. In an example, a first PV cable terminates with a male connector housing, and a second PV cable terminates with a female connector housing. The housings are configured to interconnect to provide a sealed, mechanically locked, and electrically conductive path between the first and second PV cables. When assembled together, the male connector housing and the female connector housing may together be referred to as a "cable connector." Examples of cable connectors include MC4 connectors, T4 connectors, H4 connectors, and the like.

The PV cables and cable connectors are routed, secured, and/or connected to the support structure at one or more of the column supports, torque tubes, or mounting brackets using various manual methods, such as wrapping cable ties around the cables and the framing or utilizing wire hooks to lift cables above structure. Existing cable management solutions often lack features to directly control the orientation of the PV cable relative to the cable connector. This lack of controlled orientation may result in inconsistent installations, as the physical arrangement of the solar connection depends on the individual technique of the installer. Consequently, PV cables may exit the cable connector body at sharp angles or under mechanical stress. Such arrangements may lead to the eventual failure of the PV cable or failure of the weatherproof connector seal of the PV connector. Furthermore, conventional securement methods often place PV cable connectors in direct contact with metal support structures or other adjacent connectors. This lack of isolation may lead to excessive thermal stress, as heat dissipation may be restricted when cable connectors are placed in large bundles or in close proximity to other heat-generating or heat-radiating components.

Additionally, improperly secured PV cables are susceptible to dynamic movement and vibration, particularly within solar tracker systems. This movement may cause the outer sheathing and insulation of the PV cable to abrade against the support structure. Such abrasion may eventually expose internal wiring to environmental elements, leading to electrical shorts and connector failure. Standard securement techniques, such as wrapping cable ties directly around a cable connector body, are often discouraged by manufacturers as they may create localized pressure points that deform the environmental seal of the cable connector. In the absence of a dedicated structural interface that mechanically enforces required separation distances and axial alignment, such improper techniques remain a common industry practice.

### SUMMARY

This disclosure describes techniques and apparatuses for protection management for solar cable connections. In aspects, the disclosure relates to a fixing configured to support and protect photovoltaic (PV) cable connectors and associated cables within solar energy installations.

The fixing includes an elongated portion having a top side opposite a bottom side, and a first portion opposite a second portion. To facilitate consistent cable management and meet manufacturer-specific installation parameters, a first cable support is positioned at the first portion and configured to retain a first cable to limit the bend radius of the first cable. A second cable support is spaced apart from the first cable support and configured to retain a second cable to limit its respective bend radius. In implementations, the fixing incorporates a first stop portion and a second stop portion that extends from the elongated portion. The first stop portion is configured to space the cable connector from the first cable support to maintain the bend radius of the first cable, while the second stop portion is configured to space the cable connector from the second cable support to maintain the bend radius of the second cable. The fixing includes a receiver portion configured to receive the cable connector. The receiver portion is defined by the first stop portion, the second stop portion, and the elongated portion.

The present disclosure addresses problems associated with inconsistent strain relief and the vulnerability of connector assemblies to environmental and mechanical stress. By providing integrated stop portions, disclosed fixings establish a fixed mechanical stop that maintains a predetermined straight-line exit distance between the connector body and the point of cable retention. This configuration ensures that the cable seal of the cable connector remains in a neutral, uncompressed state, thereby mitigating fatigue-induced failure. Additionally, in aspects the arrangement of the riser portions and retention members is configured to suspend the cable connector above the elongated portion. This elevation defines an air gap that promotes convective heat dissipation and creates a physical barrier that prevents the accumulation of moisture, debris, or thermal energy transfer from the underlying and/or adjacent support structure.

In further implementations, the fixing includes a mount portion configured to attach to a support structure. The mount portion may include various configurations, such as strap passageways for receiving cable ties or a standardized insert channel configured to slidingly receive mating T-slot connectors for modular fasteners. Optional features include a shield portion that may be snap-fitted to the elongated portion to provide a physical barrier against ultraviolet (UV) radiation and mechanical impacts. These configurations provide a versatile and high-reliability solution for maintaining the structural and electrical integrity of solar cable connections across diverse installation environments.

This Summary is provided to introduce simplified concepts of the present disclosure, which are further described below in the Detailed Description and are illustrated in the Drawings. This Summary is not intended to identify all implementations of the techniques and apparatuses described in the Detailed Description and illustrated in the Drawings and is not intended to identify essential features of the claimed subject matter. Further, this Summary is not intended for use in determining the scope of the claimed subject matter.

### BRIEF DESCRIPTION OF THE DRAWINGS

The details of one or more implementations of techniques and apparatuses for protection management for solar cable connections are described with reference to the following Drawings.
FIG. 1 is a schematic representation of the presently disclosed techniques and apparatuses across diverse application environments.
FIG. 2 is a perspective view of a first fixing.
FIG. 3 is a partial, first side view of the fixing illustrated in FIG. 2.
FIG. 4 is a first side view of the fixing of FIG. 2 in an installed state on a support structure, including a pair of cables and a cable connector.
FIG. 5A is a perspective view of the fixing of FIG. 2 with an attached shield portion.
FIG. 5B is a perspective view of the shield portion of FIG. 5A.
FIG. 6A is a partial, first side view of a second fixing in an installed state on a support structure, including a cable and a cable connector.
FIG. 6B is a partial, second side view of the fixing of FIG. 6A.
FIG. 7 is an exploded perspective view of a third fixing, including modular mount attachments.
FIG. 8 is a bottom side view of the fixing of FIG. 7.
FIG. 9 is a first side view of the fixing of FIG. 7, illustrating a mounting interface for a modular mount attachment.
FIG. 10 is a perspective view of a fourth fixing.
FIG. 11 is an exploded detail view of the fixing of FIG. 10 illustrating a removable attachment mechanism.
FIG. 12 is a partial, first side view of a fifth fixing.
FIG. 13 is a perspective view of a system including multiple sixth fixings joined together by a shield portion.
FIG. 14 is a perspective view of a pair of seventh fixings.

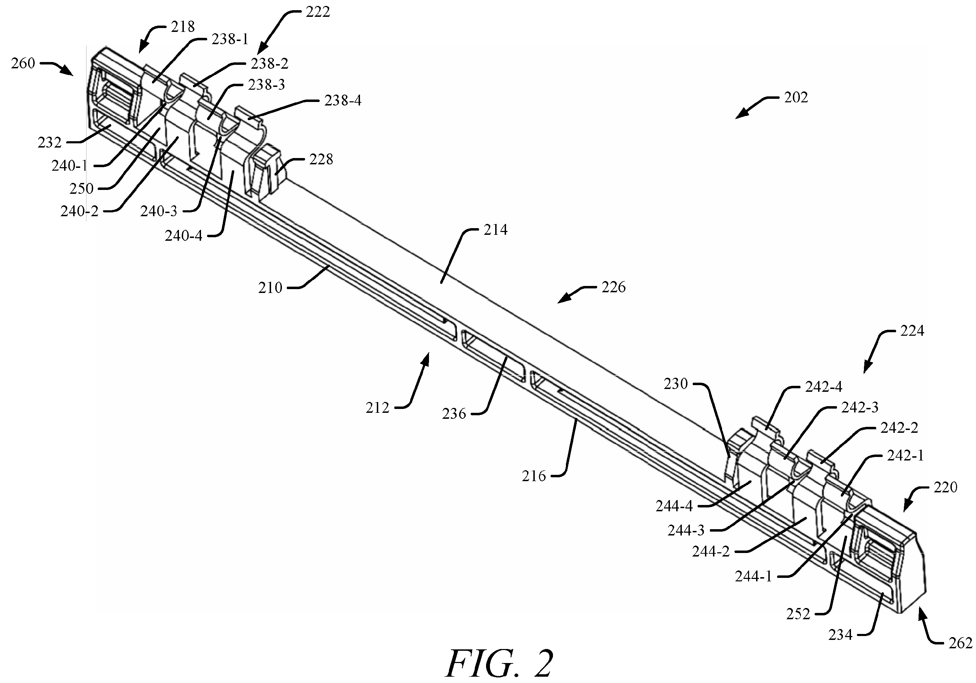

The following Detailed Description refers to the accompanying Drawings. In this description, the first digit(s) of a call-out number may correlate with the first figure number in which the call-out number is labeled. For example, call-out numbers that start with a 2 (e.g., top side 214, bottom side 216) may represent details first called out with respect to FIG. 2.

### DETAILED DESCRIPTION

Described herein are implementations of improved techniques and apparatuses for protection management for solar cable connections. In one example, the present disclosure provides a fixing configured to manage the routing and environmental protection of photovoltaic (PV) cables and their associated cable connectors within a solar energy installation. The fixing is configured to attach to a support structure. A support structure is a surface or framework to which a fixing may attach. Examples of support structures include machines, cabinets, housings, frames, enclosures, vehicle chassis, panels, support beams, torque tubes, and the like. In the context of solar energy installations, a support structure may include a torque tube rotationally mounted on column supports for a solar tracker system. The support structure may include a mount surface and/or a mount aperture (e.g., a slot, a channel, a bore, or a threaded hole) defined therein.

The fixing ensures high-reliability cable management by maintaining manufacturer-recommended installation parameters through integrated structural features. For instance, in a typical use case involving the interconnection of solar panels, the fixing is secured to a support structure, such as a torque tube. A technician routes a first cable and a second cable through the fixing such that the cable connector is positioned within a receiver portion. The first and second stop portions physically constrain the cable connector, spacing it away from the point where the cables are retained by cable supports.

Another use case involves high-density routing where multiple fixings are interlocked to manage parallel rows of strings. By utilizing the integrated riser portions, the cable connector is suspended above the elongated portion. This configuration provides an effect of creating an air gap around the cable connector, which results in improved heat dissipation compared to conventional methods where connectors are bundled or placed in direct contact with one another and/or structures.

The present disclosure prominently identifies improvements deriving from the combination of the stop portions and the cable supports. Specifically, the stop portions maintain a desired straight-exit distance for the cables as they emerge from the cable connector. This solution addresses the problem of fatigue-induced failure and moisture ingress at the connector seals. By preventing the cable connector from shifting toward the cable supports, the fixing provides a more consistent strain relief and a better bend radius control than manual securement techniques. Consequently, the apparatus achieves lower latency in maintenance requirements and increased longevity of the electrical connection.

Furthermore, the modular nature of the mount portion, including the insert channel, allows the fixing to adapt to various support structures using different mount attachments. This versatility ensures that the advantages of isolation and alignment are maintained across diverse application environments, such as tracker systems where dynamic movement might otherwise cause cable abrasion. The integrated shield portion optionally provides an additional effect of protecting the cable connector from ultraviolet (UV) radiation and mechanical impacts, further reducing the risk of environmental degradation.

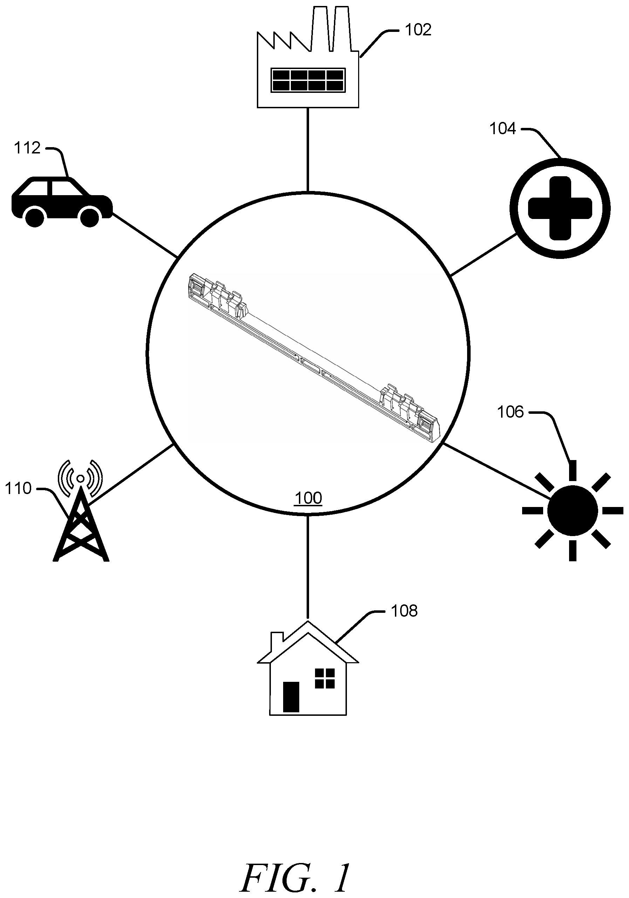

FIG. 1 is a schematic representation of a protection management for solar cable connections 100 for providing strain relief to bundles of elongated objects. As discussed herein, the protection management for solar cable connections 100 may have particular application in the energy and utility markets 106 (e.g., for the routing of cables and cable connectors in photovoltaic systems). While this disclosure, including the Drawings, references these markets, the protection management for solar cable connections 100 may have application to bundles of elongated objects in other markets, including but not limited to industrial and manufacturing markets 102, healthcare markets 104, consumer and commercial markets 108, telecommunications and data infrastructure markets 110, and/or transportation markets 112.

The industrial and manufacturing markets 102 include industrial automation and equipment, control panels, machine building, machinery, electrical enclosures, material handling systems (e.g., conveyors), cooling systems, heavy equipment (e.g., construction and mining machinery), agricultural technology (e.g., farming equipment), chemical (e.g., chemical processing equipment), robotics (e.g., automated robotic systems), original equipment manufacturers (OEMS), mechanical components, and mechanical systems. The healthcare markets 104 include medical equipment and technology, and dental equipment and technology. The energy and utility markets 106 include renewable energy systems (e.g., solar panels, solar arrays, wind turbines, hydroelectric generators), power generation and distribution, industrial lighting, and commercial lighting. The energy and utility markets 106 also include photovoltaic systems that include one or more panels (e.g., solar panels) of photovoltaic cells mounted on a support structure where the electrical output of the solar panels is transferred to the electrical grid or an electrical storage device (e.g., battery) through one or more PV cables.

The consumer and commercial markets 108 include appliances (e.g., home and commercial appliances), heating, ventilation, and air conditioning (HVAC), and consumer electronic devices. The telecommunications and data infrastructure markets 110 include telecommunications (e.g., general telecom services), communications (e.g., communication systems and equipment), internet service providers (ISPs), cable television companies (CATV), infrastructure for data storage and processing (e.g., data centers), broadband (e.g., broadband internet services), and datacom (e.g., data communications equipment). The transportation markets 112 include manufacturing and components for vehicles, trucks, heavy equipment, automobiles, rail conveyances (e.g., trains), marine craft (e.g., ships, boats), aircraft, and aerospace.

As used herein, an "elongated article" may include one or more objects, such as cables, wires, hoses, tubes, conduit, and the like, as well as bundles thereof. In implementations, the elongated article is a photovoltaic (PV) cable that transfers electrical output from solar panels to a grid or storage device. A first PV cable may attach to a second PV cable via a cable connector. In aspects, the use of "cable connector" herein refers to a photovoltaic connector assembly (e.g., MC4, T4, H4, SOLARLOK^{®} connectors, RADOX^{®} connectors) that electrically couples at least two PV cables together.

The present disclosure includes fixings configured to receive one or more photovoltaic cables and a cable connector. The implementations described herein are operable to guide, support, and protect photovoltaic cables that are routed along a support structure in a solar installation. Aspects described in the present disclosure address problems associated with inconsistent strain relief, thermal stress, and vulnerability of cable connectors to environmental degradation. By providing integrated stop portions and riser portions, the disclosed fixing ensures that manufacturer-recommended bend radii are maintained, thereby mitigating fatigue-induced failure and electrical shorts.

While solar cable connectors and PV cables are engineered to survive decades of extreme UV exposure and temperature swings, they remain physically vulnerable to mechanical over-stress. One common source of mechanical over-stress is the sharp bending of the PV cable where it passes into the cable connector. The bending may compress the inner side of the cable and stretch the outer side of the insulation of the cable. Over time, a stretching and compression cycle may lead to the decreased performance and eventual failure of the cable. Further, the bending may compromise the weatherproof seal ("environmental seal") between the cable connector and the PV cable, resulting in the ingress of contaminants (e.g., water, dust) into the solar cable connection.

A minimum bend radius (e.g., 4 to 5 times the outside diameter of the cable) may be defined for a cable by the manufacturer, with the minimum bend radius being the smallest allowable radius the cable is designed for. In this way, a PV connector manufacturer may recommend that the cable exiting the cable connector maintain a straight orientation until the cable is a distance (e.g., 20mm to 30mm) from the cable connector, thereby defining a minimum bend radius for the application.

Referring now to FIGS. 2-4, a fixing 202 (aka a "PV connection support") is illustrated. The fixing 202 is similar to the protection management for solar cable connections 100 illustrated in FIG. 1 and described above, except as detailed below. The fixing 202 is configured to manage and protect elongated articles (e.g., PV cables). The fixing 202 includes an elongated base portion (e.g., elongated 210) and may serve as a nonconductive mounting frame for the mounting of one or more PV cables and/or cable connectors to a support surface. The elongated portion 210 includes a top side 214 opposite a bottom side 216, and a first portion 218 opposite a second portion 220. In aspects, the first portion 218 is a first end portion and/or the second portion 220 is a second end portion. The fixing 202 is designed to support and protect cable connectors and associated PV cables within solar energy installations by providing consistent spacing and strain relief.

The fixing 202 includes a first cable support 222 positioned at the first portion 218 and a second cable support 224 positioned at the second portion 220. The second cable support 224 may be spaced apart from the first cable support 222. Each cable support is configured to retain at least one respective cable (e.g., first cable 402, second cable 404) to limit a bend radius of the retained cable. In aspects, the cable supports are open-ended to allow for top-loading and/or side-loading of cables without needing to thread the entire length of the cable through an orifice defined in the cable support.

The first cable support 222 and the second cable support 224 respectively include one or more cable retainers that are configured to receive at least one cable. In other aspects, a cable support may include one or more cable retainers that are configured to receive multiple cables. The cable retainer may be configured to receive multiple cables of differing geometries (e.g., different wire gauges). The first and second cable supports may be configured to retain a plurality of cables in a parallel, high-density arrangement where each cable support includes multiple rows of cable retainers, providing capacity for securing at least a plurality of parallel cables. These cable retainers may be arranged in a staggered vertical and lateral grid, which ensures that each individual cable is physically isolated from adjacent cables. This isolation provides a effect of preventing the formation of "hot spots" within a cable bundle, as the individual retention members of the cable supports maintain a constant air-flow path between the cables, thereby optimizing convective cooling across the high-density routing path.

The open-ended cable supports (first cable support 222, second cable support 224) are interlocking offset cantilever retainers that include a base and an offset cantilevered arm. For example, the first cable support 222 may include base 250, first arm 238-1, second arm 238-2, third arm 238-3, and fourth arm 238-4 and the second cable support may include base 252, first arm 242-1, second arm 242-2, third arm 242-3, and fourth arm 242-4. The base of a cable support may extend from the elongated portion 210, for example from the top side 214 of the elongated portion 210.

The offset cantilevered arms extend generally upward and inward from the base. Each arm defines a curved arc portion having a concave inner surface and a convex outer surface. The arms are positioned in an offset, staggered arrangement along the longitudinal axis of the cable path. In this way, the first arm's curved arc portion faces the second arm's curved arc portion, and the like, such that their collective internal diameters define a substantially cylindrical internal cable cavity. The distal ends (tips) of the opposing arms are separated by a narrow entry throat. Each distal end may include an angled entry ramp or chamfer, so that when a cable is pressed against these ramps, the downward force is converted into a lateral vector that drives the arms apart elastically. Once the cable passes the maximum width of the arc, the stored elastic energy in the cantilevered arms causes them to return to their nominal biased position.

In aspects, the offset cantilever arms include riser portions that extend from the base (base 250, base 252) to support the cantilever arm spaced apart from the base to elevate cables held within the cantilever arms. For example, in the aspect of FIGS. 2-4, first arm 238-1 includes riser portion 240-1, second arm 238-2 includes riser portion 240-2, third arm 238-3 includes riser portion 240-3, fourth arm 238-4 includes riser portion 240-4, first arm 242-1 includes riser portion 244-1, second arm 242-2 includes riser portion 244-2, third arm 242-3 includes riser portion 244-3, and fourth arm 242-4 includes riser portion 244-4.

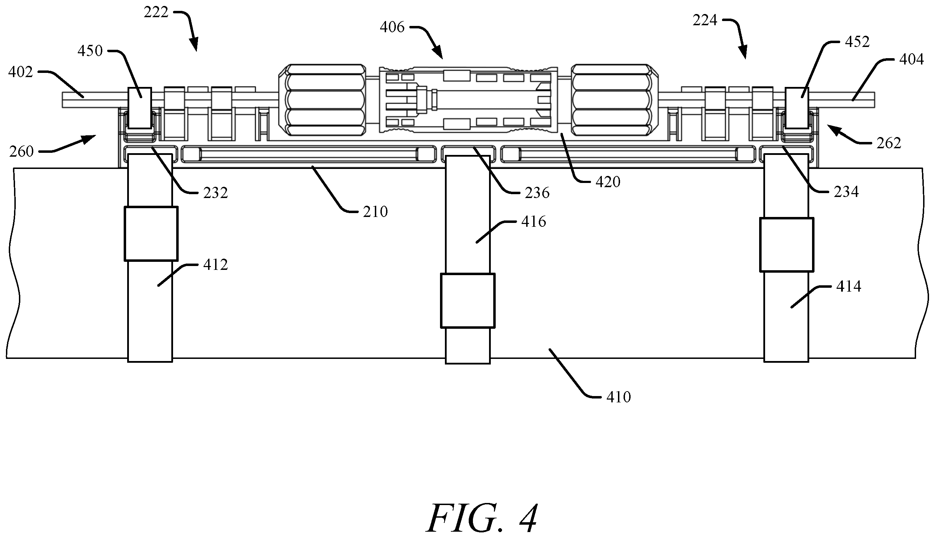

In implementations, the riser portions have a height sufficient to provide a predetermined clearance between the cables and the top side 214 of the elongated portion 210. The riser portions operate to elevate the cables such that the retention members position the cables to suspend the cable connector above the elongated portion. The cables held within the cantilever arms are supported such that the cable connector 406 is suspended above the elongated portion 210, defining an air gap 420, as illustrated in FIG. 4. This air gap 420 facilitates heat dissipation and prevents the cable connector 406 from contacting standing water or debris on the support structure 410. In one aspect, the air gap 420 is a 1.0mm gap.

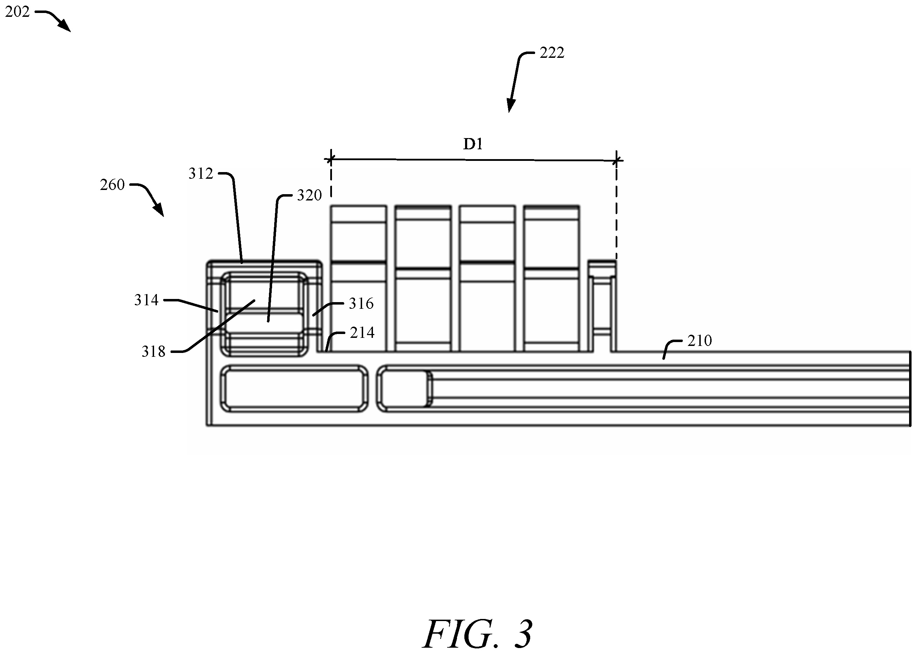

The structural arrangement of the first stop portion, the second stop portion, and the respective cable supports is configured to mechanically enforce critical installation parameters defined by connector manufacturers (e.g., a straight-line exit requirement). Specifically, the longitudinal distance between a stop portion and the distal side (outside) its corresponding cable support is pre-engineered to define a non-adjustable minimum threshold for cable routing. An example longitudinal distance is illustrated as D1 in FIG. 3. This geometric constraint ensures that a cable exiting the cable connector is maintained in a substantially linear orientation for a predetermined distance before it exits the mechanical retention at the cable support. By physically obstructing the cable connector from migrating toward the cable supports, the fixing renders it mechanically impossible for an installer to introduce a bend or strain at the connector-to-cable interface, thereby ensuring automated compliance with manufacturer-specified strain relief tolerances regardless of manual installation technique.

In aspects, to manage the longitudinal position of the cable connector 406, the fixing 202 incorporates a first stop portion 228 and a second stop portion 230. These stop portions extend from the elongated portion 210 into a receiver portion 226 defined between the cable supports (first cable support 222, second cable support 224). In aspects, a stop portion may be integrally formed with the elongated portion 210, or may extend from at least one of the top side 214 or the cable supports (cable support 222, cable support 224). For example, in modular implementations, the stop portions may include vertical flanges extending from the base of the cable supports to define the longitudinal boundaries of the receiver portion. The stop portions 228, 230 prevent the cable connector 406 from shifting, maintaining the desired separation distance (D1) for the cables. In the aspect of FIGS. 2-4, the stop portions are configured to space the cable connector 406 from the outside of the cable supports by a desired separation distance (e.g., 20mm, 25mm, 4 to 5 times the outside diameter of the cable, or another distance). This longitudinal constraint covers a straight-exit distance that ensures that the cable exits the cable connector without bending or stress, which results in the maintenance of a desired bend radius and provides strain relief. In aspects, a width of the cable supports may define at least a portion of the separation distance.

In aspects, the fixing includes a mount portion that is configured to attach the elongated portion to a support structure. The mount portion may include any common connection manner, including, but not limited to, a fastener (e.g., a blind hole fastener, a clamp fastener, a mechanical fastener, a T-nut fastener for a T-slot metal frame, an arrowhead fastener, a fir-tree fastener, a mounting edge clip, a twist-lock fastener configured for receipt into the slot of a rail, a weld stud mount, a cable attachment, a hose attachment), an adhesive fastener (e.g., a double-sided adhesive tape, a double-stick adhesive foam, a pressure-sensitive adhesive tape, and the like), a magnet, a friction fit, and the like, and combinations thereof (e.g., a fastener and an adhesive fastener, an adhesive fastener and a magnet). In implementations, a mount portion may include an aperture (e.g., mounting hole) that is defined therethrough, which is configured to receive a fastener (e.g., a bolt, a screw) that engages a mounting aperture (e.g., a bore) that is defined in the support structure. In other implementations, a connector may be configured to engage an elongated fastener (e.g., a stud, a threaded bolt) extending from the support structure, may be configured to clamp onto an edge of the support structure (e.g., utilizing an edge clip), and/or the like. In implementations, a mount portion may be omitted.

In the implementation illustrated in FIGS. 2-4, the fixing 202 includes a mount portion 212 that is configured to attach the elongated portion 210 to a support structure 410. The mount portion 212 includes at least one strap passageway that is defined through the elongated portion 210 or another portion of the fixing 202 and is configured to receive strapping material therethrough. A strap passageway may be any geometric shape, including but not limited, polygonal shapes (e.g., square shape, rectangular shape) and shapes bounded by curves (e.g., ovular shapes). The fixing 202 may include a first strap passageway 232 is located at the first portion 218, a second strap passageway 234 is located at the second portion 220, and/or a third strap passageway 236 is located between the first portion 218 and the second portion 220. These passageways are configured to receive strapping material (e.g., strap, cable tie, heavy-duty cable tie) to secure the fixing 202 to the support structure 410. For example, FIG. 4 illustrates a first strap 412 extending through the first strap passageway 232 and around the support structure 410, a second strap 414 extending through the second strap passageway 234 and around the support structure 410, and a third strap 416 extending through the third strap passageway 236 and around the support structure 410. In such a configuration, one or more straps may be used to cinch the fixing to the support structure (e.g., the first and second straps; the third strap; the first second, and third straps).

An example installation workflow for the fixing 202 may begin with securing the mount portion 212 of the elongated portion 210 to the support structure 410. Once the fixing 202 is secured, the technician then routes the cables (e.g., first cable 402, second cable 404) by centering the cable connector 406 within the receiver portion 226 and pressing the cables through the entry throats and into the cable cavities of the cable supports.

A fixing may further include at least one cable tie cradle that is configured to fix at least one cable relative to the fixing. In FIGS. 2-4, the fixing 202 includes a first cable tie cradle 260 and a second cable tie cradle 262. The first and second cable tie cradles are configured to fix the cables within the open-ended cable supports (e.g., fix the first cable 402 within the first cable support 222 and/or the second cable 404 within the second cable support 224). The cable tie cradle (e.g., cable tie cradle 260) includes a first support arm 314, a second support arm 316, and a transverse spanner element 318. The support arms may extend from the top side 214 of the elongated portion 210. The transverse spanner element 318 is disposed between the support arms and is positioned to bridge the gap between proximal portions of the support arms. A cable tie aperture 320 is defined by the void situated between the transverse spanner element 318 and the support arms 314, 316. The cable tie aperture 320 is configured to receive an elongated strap of a cable tie 450. The transverse spanner element 318 may provide a support base (e.g., saddle 312) configured for supporting the cable before and/or after application of the cable tie. The saddle 312 may be defined by an outer surface of the transverse spanner element 318. The saddle 312 may define a cable-holding surface configured to receive the first cable 402. In aspects, the cable-holding surface includes a recess shaped to receive the first cable 402. Upon insertion of the cable tie through the cable tie aperture, the strap is configured to wrap around the transverse spanner element and the cable, thereby cinching the cable against the support base to inhibit lateral movement.

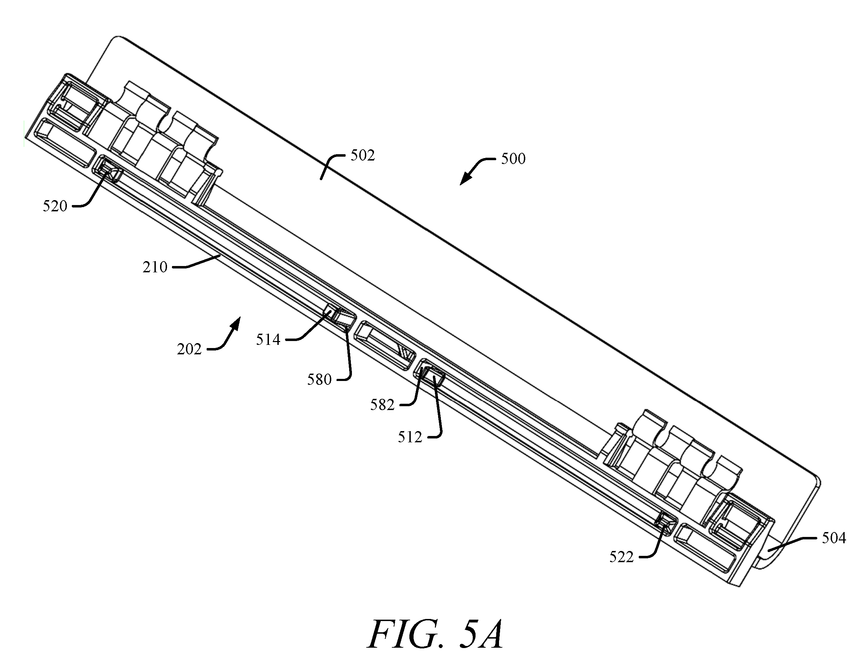

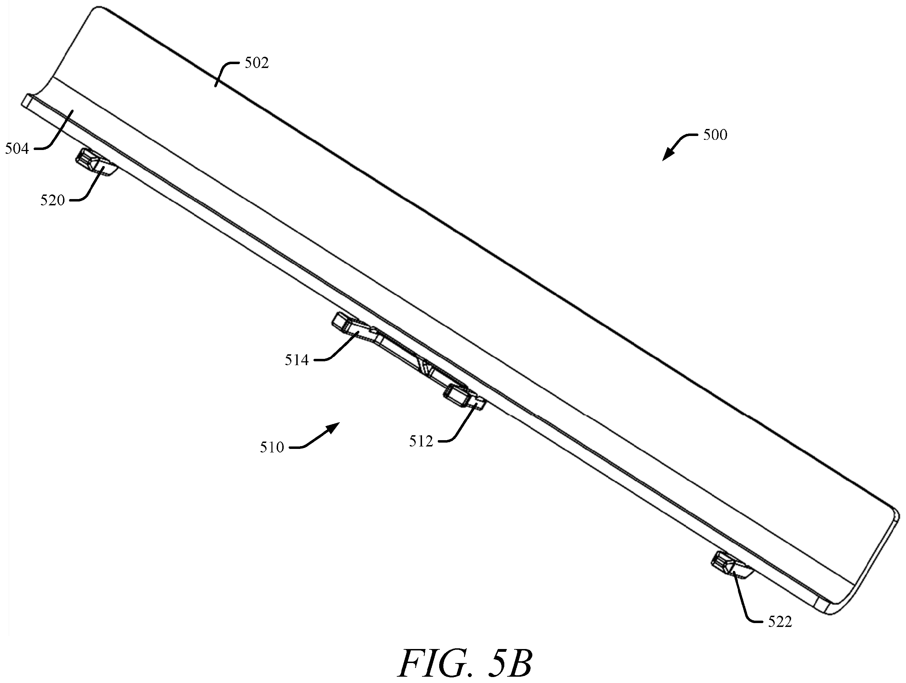

Referring now to FIGS. 5A and 5B, the fixing 202 may optionally include a shield portion 500 that is configured to provide environmental and mechanical protection for the cable connector. In this way, the shield portion 500 may provide a physical barrier against ultraviolet (UV) radiation, moisture, and mechanical impacts. In the aspect illustrated in FIGS. 5A and 5B, the shield portion 500 is an elongated, angled cover that includes a first flange 502 and a second flange 504 that meet at a predetermined angle to form a protective canopy.

In the aspect illustrated in FIGS. 5A and 5B, the shield portion 500 includes at least one connector portion 510 configured for connection with the fixing 202. The connector portion 510 may include a pair of opposing snap-fit arms (snap-fit arm 512, snap-fit arm 514), which are configured for insertion through a passthrough (e.g., passthrough 580, passthrough 582) defined through the elongated portion 210. The passthroughs may include an undercut configured to engage a hook portion of the snap-fit arm to form a snap-fit connection, thereby locking the shield portion 500 to the elongated portion 210. In aspects, the snap-fit connection may be releasable to enable the shield portion to be removed from the elongated portion. In other aspects, a shield portion may be configured to attach to the elongated portion via another mechanism (e.g., an interference fit, adhesive, mechanical connector, and the like). As illustrated in FIG. 5B, the shield portion 500 the connector portion 510 is centrally located on the shield portion 500. In aspects, the shield portion 500 and the fixing 202 are integrally formed.

The shield portion may include at least one guide post that is positioned spaced apart from the snap-fit arm(s) to further facilitate alignment and securement of the shield portion to the fixing. In the aspect illustrated in FIGS. 5A and 5B, the shield portion 500 includes a first guide post 520 and a second guide post 522, which are respectively configured for insertion into and/or through apertures defined in the elongated portion 210 to provide further support for the shield portion 500 (e.g., against rotation).

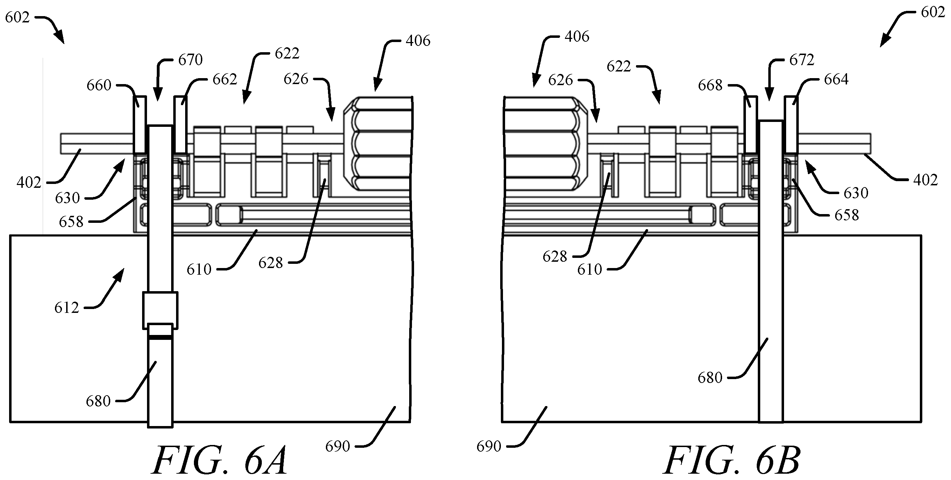

Referring now to FIGS. 6A and 6B, another fixing 602 is illustrated. The fixing 602 is similar to the fixing 202 illustrated in FIG. 2 and described above, except as detailed below. Thus, the fixing 602 includes an elongated portion 610, a mount portion 612, a top side opposite a bottom side, a first portion opposite a second portion (not illustrated), cable supports (e.g., a first cable support 622), a receiver portion 626, stop portions (e.g., first stop portion 628), and a support base (saddle) 630.

The elongated portion 610 serves as a structural frame for managing cables (e.g., first cable 402, second cable 404) and/or a cable connector 406, as also illustrated in the aspect of FIG. 4. A first portion of the fixing 602 includes a first cable support 622 that is configured to retain the first cable 402. The mount portion 612 includes a least one pair of saddle arms (e.g., saddle arm 660, saddle arm 662, saddle arm 664, saddle arm 668) that extend from the fixing 602 (e.g., from a first cable tie cradle 658). The saddle arms define a cradle (e.g., cradle 670, cradle 672) that is configured to receive a strap 680 (e.g., a heavy-duty cable tie) therethrough. The strap 680 is utilized to secure the mount portion 612 to the support structure 690. The strap 680 may further hold the cable 402 within the first cable support 622. The functional relationship between these components ensures that the fixing 602 is securely anchored at multiple points along its length while simultaneously managing the cables. In this way, the fixing 602 provides a robust mounting interface that resists mechanical loads and vibrations common in solar tracker environments. By maintaining the cable connector 406 in a stable position relative to the support structure, the predetermined separation distances and manufacturer-recommended bend radius parameters may be ensured.

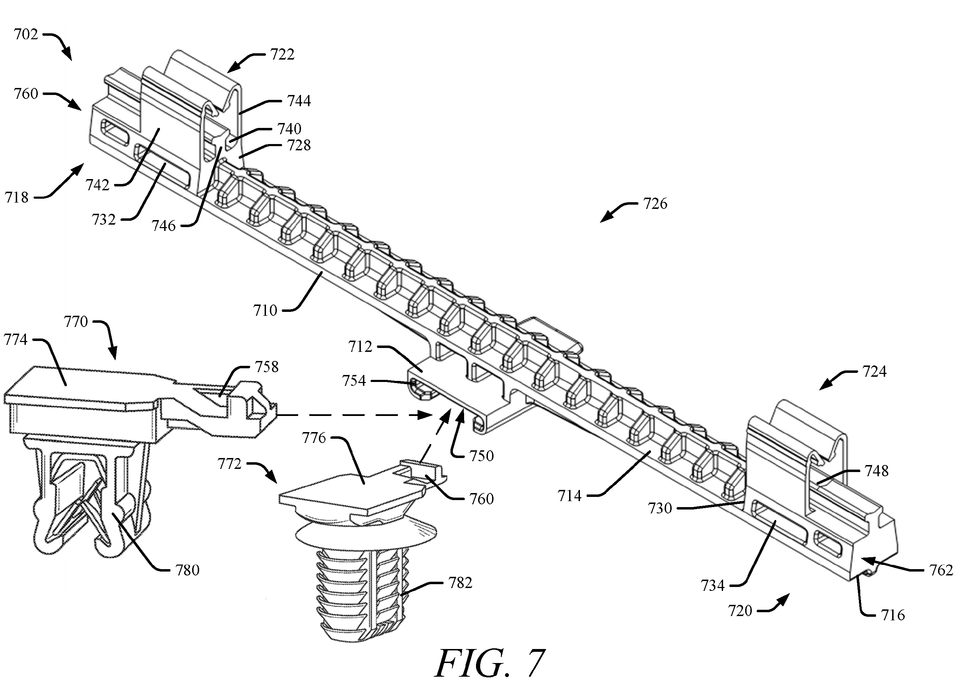

Referring now to FIGS. 7-9, another aspect of a fixing 702 is illustrated. The fixing 702 is similar to the fixing 202 illustrated in FIGS. 2-4 and described above, except as detailed below. Thus, the fixing 702 includes an elongated portion 710, a mount portion 712, a top side 714 opposite a bottom side 716, a first portion 718 opposite a second portion 720, a first cable support 722, a second cable support 724, a receiver portion 726, a first stop portion 728, a second stop portion 730, a first strap passageway 732, a second strap passageway 734, a first riser portion 746, a second riser portion 748, a first cable tie cradle 760, and a second cable tie cradle 762.

The elongated portion 710 serves as a structural frame for managing cables (e.g., first cable 402, second cable 404) and/or a cable connector 406, as illustrated in the aspect of FIG. 4. The mount portion 712 is configured to interface with a mount attachment (e.g., mount attachment 770, mount attachment 772). In aspects, the insert channel 750 is centered between the first portion 718 and the second portion 720 to provide a balanced anchoring point. The mount portion 712 includes an interlock mechanism defined in the bottom side 716 of the elongated portion 710. The interlock mechanism includes an insert channel 750 configured to connect with the mount attachment. The insert channel 750 includes a T-slot 754 that is open at a first end 852 and may be closed at an opposite second end. The T-slot 754 includes a pair of laterally extending flanges (e.g., a first flange 956 and a second flange 958), which define the T-slot 754. The T-slot 754 is configured to slidingly receive a mating connector (e.g., a T-slot connector 774, T-slot connector 776) of the mount attachment (e.g., mount attachment 770, mount attachment 772). To secure the connection, a retention tab (e.g., retention tab 758, retention tab 760) may be defined in from the mount attachment and configured to engage a receiver 802 defined in the insert channel 750, thereby locking the mount attachment to the fixing 702. In aspects, the connection between the insert channel 750 and the mount attachment is releasable to enable the mount attachment to be removed from the T-slot 754.

This modular interface allows the fixing 702 to be customized with different types of mount attachments depending on the requirements of the support structure. For example, the mount attachment 770 includes an edge clip fastener 780 and mount attachment 772 includes a fir-tree fastener 782 (e.g., a push-pin style fastener). Other compatible mount attachments include arrowhead fasteners, clamp fasteners, mechanical fasteners, twist-lock fasteners, and the like. By utilizing the interlock mechanism, a technician may select a suitable mount attachment to adapt the fixing 702 for different mounting environments while maintaining the consistent cable orientation and strain relief provided by the elongated portion 710.

The fixing 702 may be configured to connect with a shield portion (e.g., shield portion 500, shield portion 1350) to provide a physical barrier against UV radiation and mechanical impacts for the cable connector 406. In aspects, the shield portion is integral to the fixing 702.

The first cable support 722 and the second cable support 724 are open-ended cable supports that are configured to receive a cable therein. In the aspect of FIGS. 7-9, the first and second cable supports are bifurcated J-hook style retainers that include a base 740 and a pair of opposing J-shaped cantilever arms (a first J-shaped arm 742 and a second J-shaped arm 744) that extend (e.g., generally perpendicular) from the base 740. Each cantilever arm includes a substantially linear vertical member (the stem) and a curved terminal portion (the J-hook) that arc inward toward the longitudinal centerline of the retainer. The first and second arms are mirrored across this centerline to define a substantially elliptical or circular internal cable cavity.

The distal tips of the J-shaped arms are configured to serve as the primary lead-in ramps and the outer surfaces of the J-hooks are beveled or radiused to create a V-shaped or funnel-like entry throat. When a cable is pressed against these distal tips, the convergent geometry translates the downward axial force into a lateral outward force, causing the J-shaped arms to elastically deflect away from each other. Once the maximum diameter of the cable passes the "pinch point" created by the tips, the arms snap back to their biased position. Because the tips of the J-shape curve back downward toward the cable cavity, they create a re-entrant lip that acts as a physical "dead-stop" or barb that prevents the cable from backing out of the throat under upward tension. The distal tips of the J-shaped arms are configured to make tangential contact with the top of the insulative jacket of the cable, providing active downward pressure that minimizes cable "rattle" and prevents the jacket abrasion that occurs when cables are loose in a larger cavity.

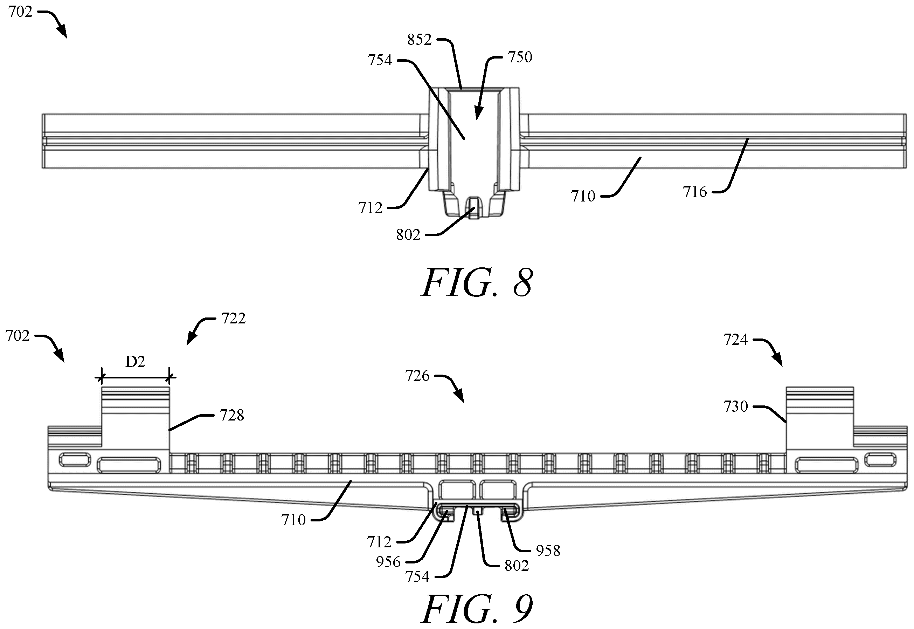

The structural arrangement of the first stop portion, the second stop portion, and the respective cable supports is configured to mechanically enforce critical installation parameters defined by connector manufacturers (e.g., a straight-line exit requirement). Specifically, the longitudinal distance between a stop portion and the distal side (outside) its corresponding cable support is pre-engineered to define a non-adjustable minimum threshold for cable routing. An example longitudinal distance is illustrated as D2 in FIG. 9. This geometric constraint ensures that a cable exiting the cable connector is maintained in a substantially linear orientation for a predetermined distance before it exits the mechanical retention at the cable support. By physically obstructing the cable connector from migrating toward the cable supports, the fixing renders it mechanically impossible for an installer to introduce a bend or strain at the connector-to-cable interface, thereby ensuring automated compliance with manufacturer-specified strain relief tolerances regardless of manual installation technique.

In aspects, to manage the longitudinal position of the cable connector, the fixing 702 incorporates a first stop portion 728 and a second stop portion 730. In this aspect, the stop portions are defined by the proximal portions of the cable supports (cable support 722, cable support 724) that along with the elongated portion define the receiver portion 726. The stop portions 728, 730 prevent the cable connector 406 from shifting, maintaining the desired separation distance (D2) for the cables. In the aspect of FIGS. 7-9, the stop portions are configured to space the cable connector 406 from the outside of the cable supports by a desired separation distance (e.g., 20mm, 25mm, 4 to 5 times the outside diameter of the cable, or another distance). This longitudinal constraint covers a straight-exit distance that ensures that the cable exits the cable connector without bending or stress, which results in the maintenance of a desired bend radius and provides strain relief. In aspects, a width of the cable supports may define at least a portion of the separation distance.

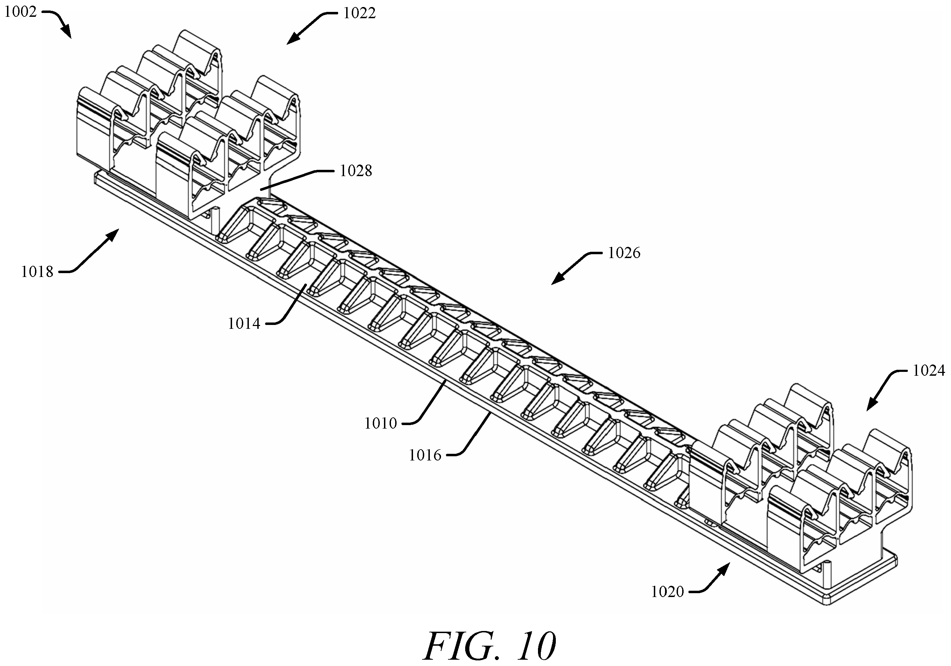

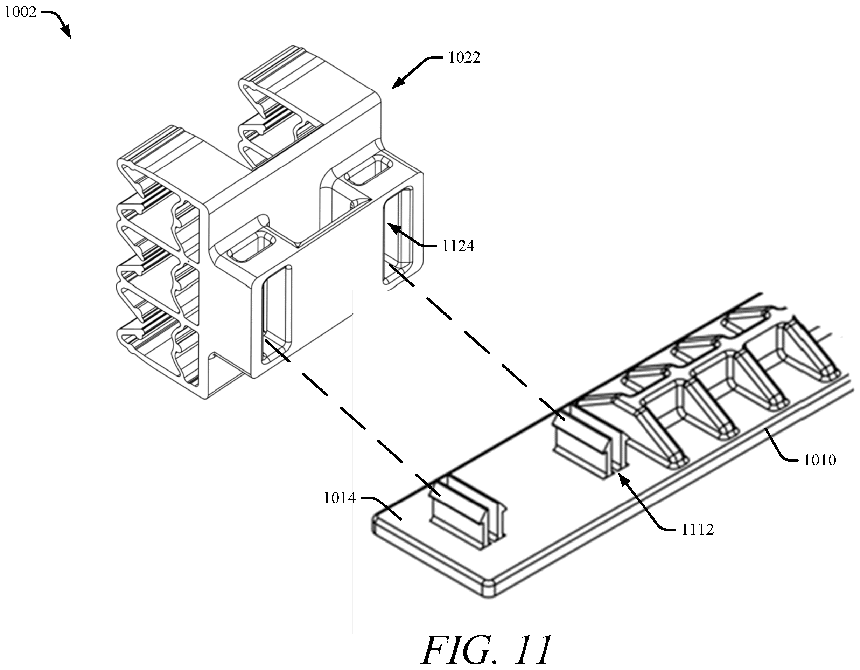

Referring now to FIGS. 10 and 11, another fixing 1002 is illustrated. The fixing 1002 is similar to the fixing 202 illustrated in FIGS. 2-4 and described above, except as detailed below. Thus, the fixing 1002 includes an elongated portion 1010, a mount portion, a top side 1014 opposite a bottom side 1016, a first portion 1018 opposite a second portion 1020, cable supports (e.g., a first cable support 1022, a second cable support 1024), a receiver portion 1026, and stop portions (e.g., first stop portion 1028).

The elongated portion 1010 serves as a structural frame for managing cables (e.g., first cable 402, second cable 404) and/or a cable connector 406, as illustrated in the aspect of FIG. 4. In the aspect of FIGS. 10 and 11, the first and second cable supports are configured to retain a plurality of cables in a parallel, high-density arrangement. In this way, each cable support may include multiple rows of wire-retaining clips, providing capacity for securing at least three parallel cables. The cable supports illustrated are bifurcated J-hook style retainers, such as those described above with respect to FIG. 7.

The functional relationship between the elongated portion 1010 and the cable supports 1022 is facilitated by a removable attachment mechanism. As shown in the exploded detail view of FIG. 11, the first cable support 1022 includes at least one first lock portion 1124 that is configured to engage a second lock portion 1112 of the elongated portion 1010. The connection is a snap-fit connection, where the first lock portion 1124 includes an opening that includes an undercut (groove) and the second lock portion 1112 includes at least one cantilever hook that is configured for receipt into the opening to engage the undercut to form the snap-fit connection, thereby locking the cable support 1022 to the elongated portion 1010. The snap-fit connection may be releasable to enable the cable support to be removed from the elongated portion.

This modular configuration allows the fixing 1002 to be customized for specific high-density wiring requirements while maintaining the structural integrity provided by the elongated portion 1010. Further, by utilizing the removable cable supports, a technician may adapt the fixing 1002 to different cable wire gauges or quantities, ensuring that the cable connectors remain organized and isolated to prevent overheating and mechanical stress. The fixing 1002 may be configured to connect with a shield portion (e.g., shield portion 500, shield portion 1350) to provide a physical barrier against UV radiation and mechanical impacts for the cable connector 406. In aspects, the shield portion is integral to the fixing 1002.

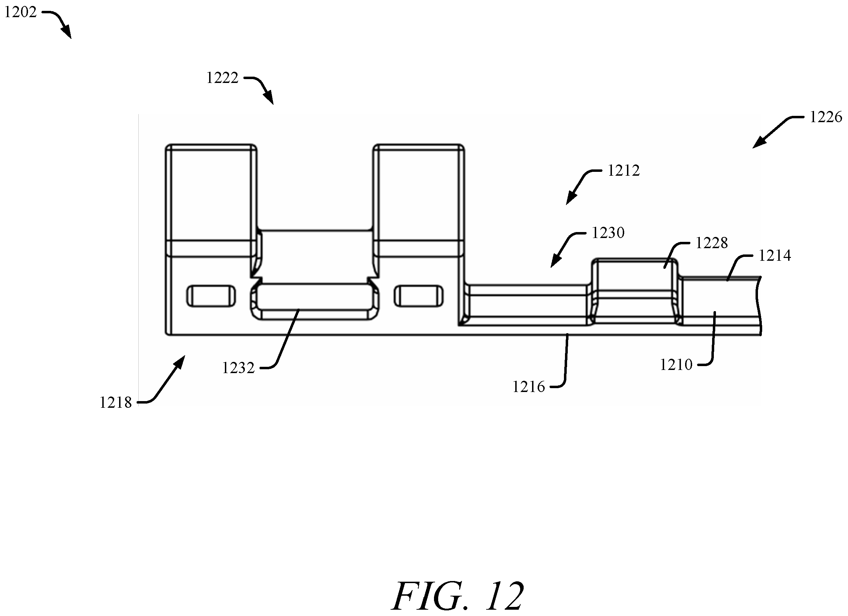

Referring now to FIG. 12, another fixing 1202 is illustrated. The fixing 1202 is similar to the fixing 202 illustrated in FIGS. 2-4 and described above, except as detailed below. Thus, the fixing 1202 includes an elongated portion 1210, a mount portion (e.g., strap passageway 1232), a top side 1214 opposite a bottom side 1216, a first portion 1218 opposite a second portion (not illustrated), at least one cable support (e.g., a first cable support 1222), a receiver portion 1226, and at least one stop portion 1228. The elongated portion 1210 serves as a structural frame for managing cables (e.g., first cable 402, second cable 404) and/or a cable connector 406, as illustrated in the aspect of FIG. 4.

The mount portion 1212 includes a first channel 1230 recessed into the top side 1214 of the elongated portion 1210. The first channel 1230 is defined between the stop portion 1228 and the first cable support 1222 and is configured to receive a strap (not illustrated) therethrough to attach the mount portion 1212 to the support structure (not illustrated). This recessed configuration ensures that the strap remains seated below or flush with the top side 1214, preventing mechanical interference with the cables or the cable connector during installation and use. The fixing 1202 may be configured to connect with a shield portion (e.g., shield portion 500, shield portion 1350) to provide a physical barrier against UV radiation and mechanical impacts for the cable connector 406. In aspects, the shield portion is integral to the fixing 1202.

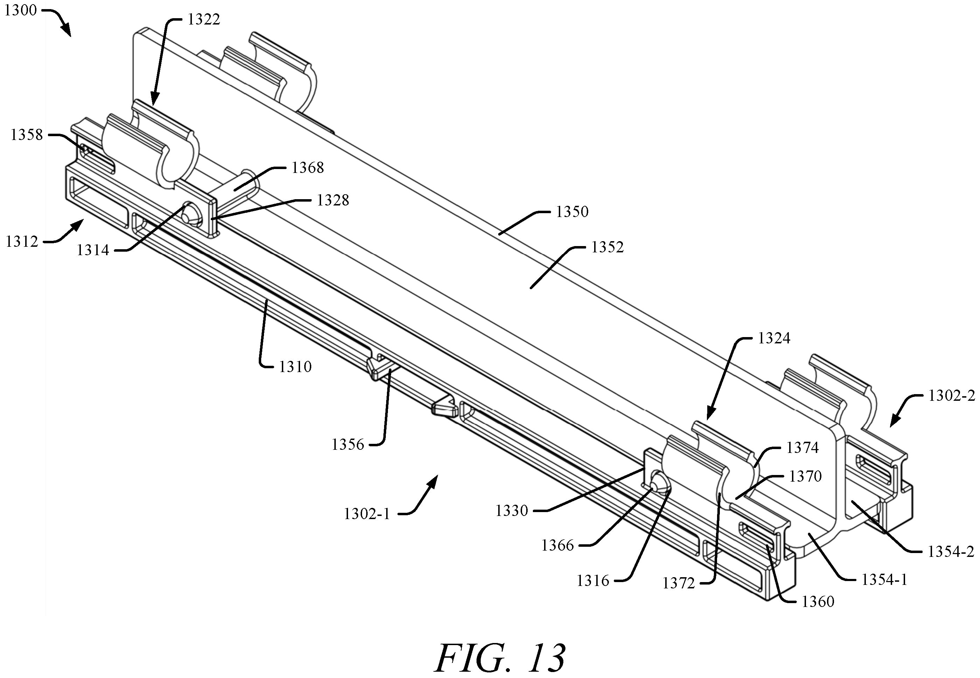

Referring now to FIG. 13, a system 1300 including multiple fixings (fixing 1302-1, fixing 1302-2) and a shield portion 1350 is illustrated. The fixings are similar to the fixing 202 illustrated in FIGS. 2-4 and described above, except as detailed below. Thus, the fixings (fixing 1302-1, fixing 1302-2) may include an elongated portion 1310, a mount portion 1312, a top side opposite a bottom side, a first portion opposite a second portion, a first cable support 1322, a second cable support 1324, a receiver portion, stop portions (e.g., first stop portion 1328, second stop portion 1330), a first cable tie cradle 1358, and a second cable tie cradle 1360. The shield portion 1350 is similar to the shield portion 500 illustrated in FIGS. 5A and 5B and described above, except as detailed below. Thus, the shield portion 1350 includes at least one first flange 1352, at least one second flange (second flange 1354-1, second flange 1354-2), connector portions (e.g., connector portion 1356), guide posts (e.g., first guide post 1366, second guide post 1368), and the like.

The shield portion 1350 is configured to interact with the first fixing 1302-1 and the second fixing 1302-2 to support complex or parallel cable routing installations. The shield portion 1350 is configured as a double shield interface that snaps in between the first fixing 1302-1 and the second fixing 1302-2, thereby maintaining consistent isolation spacing between adjacent cable connectors (not illustrated).

The cable supports (cable support 1322, cable support 1324) are cantilever snap-fit retainers that include a rigid base 1370 and at least one cantilevered locking arm (e.g., locking arm 1372, locking arm 1374) that extend in a curvilinear arc to define an internal cable cavity. The distal end of the locking arms may include a leaded entry ramp ("beveled edge") that allows the cable to be pressed against the arm, forcing it to deflect outward. Once the cable diameter clears the entry throat of the cable support, the arm's potential energy is released, snapping it back to its neutral position and retaining the cable within the internal cable cavity.

The connector portions (e.g., connector portion 1356) are configured for snap-fit connection with the fixing. The connector portion 1356 includes a pair of opposing snap-fit arms, which are configured for insertion through a passthrough defined through the elongated portion. The passthroughs include an undercut configured to engage a hook portion of the snap-fit arm to form the snap-fit connection, thereby locking the shield portion to the elongated portion. The snap-fit connection may be releasable to enable the shield portion to be removed from the elongated portion. In other aspects, a shield portion may be configured to attach to the elongated portion via another mechanism (e.g., an interference fit, adhesive, mechanical connector, and the like). In aspects, the shield portion 1350 and the fixings are integrally formed.

The shield portion 1350 may include at least one guide post that is positioned spaced apart from the snap-fit arm(s) of the connector portion 1356 to further facilitate alignment and securement of the shield portion to the fixing. In the aspect illustrated in FIG. 13, the shield portion 1350 includes a first guide post 1366 and a second guide post 1368, which are respectively configured for insertion into and/or through the apertures (aperture 1314, aperture 1316) defined in the elongated portion 1310 of the first fixing 1302-1 to provide further support for the shield portion 1350 (e.g., against rotation).

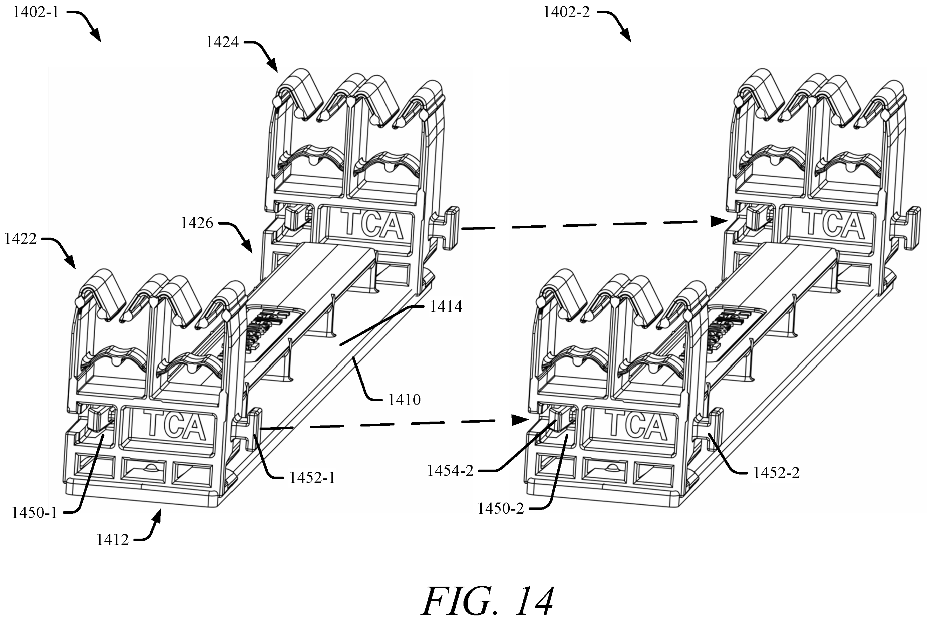

Referring now to FIG. 14, a pair of fixings (fixing 1402-1, fixing 1402-2) are illustrated. The fixing are similar to the fixing 202 illustrated in FIGS. 2-4 and described above, except as detailed below. Thus, the fixings each include an elongated portion 1410, a mount portion 1412, a top side 1414 opposite a bottom side, a first portion opposite a second portion, first cable support 1422, second cable support 1424, a receiver portion 1426, stop portions, and the like.

The fixings may incorporate a mechanical interlock configured to facilitate the formation of an array, enabling the parallel routing of connectors. For example, the mechanical interlock allows two or more fixings to be attached together, providing the ability to route cable connectors in parallel while maintaining a fixed spatial relationship. At least one of the elongated portion, the mount portion, the first portion, the second portion, the cable support, the stop portion, and/or the receiver portion of each module may include a mechanical interlock portion. The mechanical interlock portion may include a snap-fit connection and a standardized interface with a connector that is configured to interlock with a corresponding receiver on an adjacent module. The connector and the receiver may interlock via a snap-fit connection.

In the aspect illustrated in FIG. 14, the fixing 1402-1 includes a T-shaped connector 1452-1 configured to extend from a first side of the elongated portion 210 and a T-shaped receiver 1450-1 defined in an opposite second side of the elongated portion 210. The T-shaped connector 1452-1 is configured to interlock with a T-shaped receiver 1450-2 of an adjacent second fixing 1402-2 to secure the fixing 1402-1 and the second fixing 1402-2 together in a side-by-side arrangement. The receiver (e.g., T-shaped receiver 1450-1) may include a release tab 1454-1 (e.g., unlocking tab, unlocking lever) that is configured to disengage the receiver from an interlocked connector (e.g., T-shaped connector 1452-1). In aspects, the release tab is configured to enable an operator to digitally manipulate (e.g., utilizing the finger of the operator, utilizing a tool) the interlocking engagement between the receiver and the connector. Disengagement of the interlocking engagement permits the connector to be withdrawn from the receiver and the fixings to be de-coupled from one another.

The fixings (1402-1, 1402-2) may be configured to connect with a shield portion (e.g., shield portion 500, shield portion 1350) to provide a physical barrier against UV radiation and mechanical impacts for the cable connector 406. In aspects, the shield portion is integral to the fixing. In an aspect, the shield portion includes an interlocking interface (e.g., T-shaped connector, T-shaped receiver) that enables the shield portion to connect with an adjacent fixing module.

The components of the disclosed fixings may be fabricated of any suitable material, including, but not limited to, a metal, a ceramic, a polymer (e.g., a polymeric material), and/or a composite. Suitable polymeric materials may include one or more of polyamide (PA), polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet stabilized polyacetal (POMUV), acrylonitrile styrene acrylate (ASA), cross-linked thermoplastics, partially cross-linked thermoplastics, higher-temperature resins, ultraviolet (UV) resistant resins, other thermoplastic materials, and the like, and copolymers, blends, or alloys thereof, as well as fiber-reinforced materials. A suitable polymeric material may include one or more additives (e.g., heat stabilizers, impact modifiers, UV stabilizers, flame retardants, colorants, and the like.

One or more of the components of the disclosed fixings may be formed of the same material as the other components or of a different material than the other components. One or more of the components of the disclosed fixings and/or shields may be integrally formed of a suitable material(s) through a suitable fabrication technique. Suitable fabrication techniques may include one or more of an injection-molding process, an insert molding process, an overmolding process, an additive manufacturing process (e.g., a fused deposition modeling (FDM) process, a three-dimensional (3D) printing process), ultrasonic welding, or another suitable process.

Some additional examples of techniques and apparatuses for protection management for solar cable connections are as follows:
Example 1. A fixing comprising: an elongated portion comprising: a top side opposite a bottom side; and a first portion opposite a second portion; a first cable support configured to retain a first cable to limit a bend radius of the first cable, the first cable support positioned at the first portion of the elongated portion; a second cable support configured to retain a second cable to limit a bend radius of the second cable, the second cable support spaced apart from the first cable support; a first stop portion that extends from the elongated portion, the first stop portion configured to space a cable connector that connects the first and second cables from the first cable support to maintain the bend radius of the first cable; a second stop portion that extends from the elongated portion, the second stop portion configured to space the cable connector from the second cable support to maintain the bend radius of the second cable; and a receiver portion configured to receive the cable connector that connects the first and second cables, the receiver portion defined by the first stop portion, the second stop portion, and the elongated portion.
Example 2. The fixing of Example 1, wherein the elongated portion further comprises: a mount portion configured to attach to a support structure.
Example 3. The fixing of Example 2, wherein the mount portion further comprises: at least one strap passageway defined through the elongated portion, the strap passageway configured to receive a strap therethrough to attach the mount portion to the support structure.
Example 4. The fixing of Example 3, wherein the at least one strap passageway further comprises: a first strap passageway located at the first portion and configured to receive a first strap therethrough to attach the mount portion to the support structure; and a second strap passageway located at the second portion and configured to receive a second strap therethrough to attach the mount portion to the support structure.
Example 5. The fixing of Example 3, wherein the at least one strap passageway further comprises: a third strap passageway located between the first portion and the second portion.
Example 6. The fixing of Example 3, wherein the mount portion further comprises: an insert channel configured to connect with a mount attachment, the insert channel includes a T-slot defined in the bottom side of the elongated portion, the T-slot open at a first end and configured to slidingly receive a mating T-slot connector of the mount attachment.
Example 7. The fixing of Example 6, wherein the mount attachment further comprises: a clamp fastener; a fir-tree fastener; or an edge clip.
Example 8. The fixing of Example 6, wherein the insert channel is centered between the first portion and the second portion.
Example 9. The fixing of Example 2, wherein the mount portion further comprises: a first pair of saddle arms that extend from the fixing to define a first cradle configured to receive a first strap therethrough to attach the mount portion to the support structure and a second pair of saddle arms that extend from the fixing to define a second cradle configured to receive the strap therethrough to attach the mount portion to the support structure.
Example 10. The fixing of Example 2, wherein the mount portion further comprises: a first channel recessed in the top side of the elongated portion, the first channel configured to receive first strap therethrough to attach the mount portion to the support structure.
Example 11. The fixing of Example 1, wherein the first cable support further comprises: at least one riser portion configured to support a first arm spaced apart from the top side of the elongated portion.
Example 12. The fixing of Example 11, wherein the first cable support and the second cable support respectively position the first cable and the second cable to suspend the cable connector above the elongated portion to define an air gap between the cable connector and the elongated portion.
Example 13. The fixing of Example 11, wherein the arms and the respective riser portions are integrally formed.
Example 14. The fixing of Example 11, wherein the first riser portion has a height sufficient to provide a predetermined clearance between the first cable supported in the first cable support and the top side of the elongated portion.
Example 15. The fixing of Example 1, wherein: the first portion includes a first cable tie cradle configured to attach the first cable to the first portion to fix the first cable in the first cable support; and the second portion includes a second cable tie cradle configured to attach the second cable to the second portion to fix the second cable in the second cable support.
Example 16. The fixing of Example 15, wherein the first cable tie cradle comprises: a pair of support arms; a transverse spanner element; and an aperture defined by a space between the transverse spanner element and the pair of support arms, the aperture configured to receive passage of a cable tie therethrough to fix the first cable to the first cable tie cradle.
Example 17. The fixing of Example 16, wherein the first cable tie cradle further comprises: a saddle defined by an outer surface of the transverse spanner element, the saddle configured to provide a recess shaped to receive the first cable.
Example 18. The fixing of Example 1, wherein: the first cable support includes a first lock portion; and the elongated portion includes a second lock portion that is configured for removable attachment to the first lock portion.
Example 19. The fixing of Example 1, further comprising: a shield portion configured to attach via a snap-fit connection to the elongated portion to provide a shield for the cable connector.
Example 20. The fixing of Example 1, wherein: the first stop portion extends from at least one of the top side of the elongated portion or the first cable support and into the receiver portion, and the second stop portion extends from at least one of the top side of the elongated portion or the second cable support and into the receiver portion.
Example 21. The fixing of Example 1, further comprising: a T-shaped connector configured to extend from a first side of the elongated portion; and a T-shaped receiver defined in an opposite second side of the elongated portion, wherein the T-shaped connector is configured to interlock with a T-shaped receiver of an adjacent second fixing to secure the fixing and the second fixing together in a side-by-side arrangement.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

Unless the context indicates otherwise, the use herein of the phrase "configured" describes a system, apparatus, or other structure that is constructed and/or specifically designed to perform a particular task or adopt a particular configuration. In this description, the terms "coupled" and "connected" and derivatives thereof may be used. For example, the term "connected" may be used in the description of some aspects to indicate that two or more components are in direct physical contact with each other. For another example, the term "coupled" may be used in the description of some aspects to indicate that two or more components are in direct physical contact. However, the term "coupled" may also mean that two or more components are not in direct contact with each other but still cooperate or interact with each other.

In this description, ordinal numbers such as "first" and "second" are used only to distinguish between different described objects and have no limitation on a location, a sequence, a priority, a quantity, content, or the like of the described objects. For example, a "first object" is used as an example, and there may be one or more "objects." Additionally, objects modified by different ordinal numbers may be the same or different objects. For example, if the described object is an "object," a "first object" and a "second object" may be the same or different objects.

Aspects may include one or more of the features illustrated in the Drawings and described above. Although implementations have been described in language specific to certain features and/or methods, the subject of the appended claims is not necessarily limited to the specific features or methods described. Rather, the specific features and methods are disclosed as example implementations of the disclosed techniques and apparatuses.

## Claims

1. A fixing (202) comprising:
an elongated portion (210) comprising:
a top side (214) opposite a bottom side (216); and
a first portion (218) opposite a second portion (220);
a first cable support (222) configured to retain a first cable (402) to limit a bend radius of the first cable (402), the first cable support (222) positioned at the first portion (218) of the elongated portion (210);
a second cable support (224) configured to retain a second cable (404) to limit a bend radius of the second cable (404), the second cable support (224) spaced apart from the first cable support (222);
a first stop portion (228) that extends from the elongated portion (210), the first stop portion (228) configured to space a cable connector (406) that connects the first and second cables from the first cable support (222) to maintain the bend radius of the first cable (402);
a second stop portion (230) that extends from the elongated portion (210), the second stop portion (230) configured to space the cable connector (406) from the second cable support (224) to maintain the bend radius of the second cable (404); and
a receiver portion (226) configured to receive the cable connector (406) that connects the first and second cables, the receiver portion (226) defined by the first stop portion (228), the second stop portion (230), and the elongated portion (210).

2. The fixing (202) of claim 1, wherein the elongated portion (210) further comprises:
a mount portion (212) configured to attach to a support structure (410).

3. The fixing (202) of claim 2, wherein the mount portion (212) further comprises:
at least one strap passageway (232)(234)(236) defined through the elongated portion (210), the strap passageway (232)(234)(236) configured to receive a strap (412)(414)(416) therethrough to attach the mount portion (212) to the support structure (410).

4. The fixing (202) of claim 3, wherein the at least one strap passageway further comprises:
a first strap passageway (232) located at the first portion (218) and configured to receive a first strap (412) therethrough to attach the mount portion (212) to the support structure (410); and/or
a second strap passageway (234) located at the second portion (220) and configured to receive a second strap (414) therethrough to attach the mount portion (212) to the support structure (410); and/or
a third strap passageway (236) located between the first portion (218) and the second portion (220).

5. The fixing (702) of any one of claims 2 to 4, wherein the mount portion (712) further comprises:
an insert channel (750) configured to connect with a mount attachment (770)(772), in particular with the insert channel (750) being centered between the first portion (718) and the second portion (720), where the insert channel (750) includes a T-slot (754) defined in the bottom side (716) of the elongated portion (710), the T-slot (754) open at a first end (752) and configured to slidingly receive a mating T-slot connector (774)(776) of the mount attachment (770)(772), in particular with the mount attachment (770)(772) comprising:
a clamp fastener; and/or
a fir-tree fastener; and/or
an edge clip.

6. The fixing (602) of any one of claims 2 to 5, wherein the mount portion (612) further comprises:
a first pair of saddle arms (660)(662) that extend from the fixing (602) to define a first cradle (670) configured to receive a first strap (680) therethrough to attach the mount portion (612) to the support structure (690) and a second pair of saddle arms (664)(668) that extend from the fixing (602) to define a second cradle (672) configured to receive the strap (680) therethrough to attach the mount portion (612) to the support structure (690).

7. The fixing (1202) of any one of claims 2 to 6, wherein the mount portion (1212) further comprises:
a first channel (1230) recessed in the top side (1214) of the elongated portion (1210), the first channel (1230) configured to receive first strap therethrough to attach the mount portion (1212) to the support structure.

8. The fixing (202) of any one of claims 1 to 7, wherein the first cable support (222) further comprises:
at least one riser portion (240) configured to support a first arm (238) spaced apart from the top side (214) of the elongated portion (210), in particular with the arms (238)(242) and the respective riser portions (240)(244) being integrally formed.

9. The fixing (202) of any one of claim 1 to 8, wherein the first cable support (222) and the second cable support (224) respectively position the first cable (402) and the second cable (404) to suspend the cable connector (406) above the elongated portion (210) to define an air gap (420) between the cable connector (406) and the elongated portion (210).

10. The fixing (202) of claim 8, wherein the riser portion (240) has a height sufficient to provide a predetermined clearance between the first cable (402) supported in the first cable support (222) and the top side (214) of the elongated portion (210).

11. The fixing (202) of any one of claims 1 to 10, wherein:
the first portion (218) includes a first cable tie cradle (260) configured to attach the first cable (402) to the first portion (218) to fix the first cable (402) in the first cable support (222), in particular with the first cable tie cradle (260) comprising:
a pair of support arms (314)(316);
a transverse spanner element (318); and
an aperture (320) defined by a space between the transverse spanner element (318) and the pair of support arms (314)(316), the aperture (320) configured to receive passage of a cable tie (450) therethrough to fix the first cable (402) to the first cable tie cradle (260); and
the second portion (220) includes a second cable tie cradle (262) configured to attach the second cable (404) to the second portion (220) to fix the second cable (404) in the second cable support (224).

12. The fixing (1002) of any one of claims 1 to 11, wherein:
the first cable support (1022) includes a first lock portion (1124); and
the elongated portion (1010) includes a second lock portion (1112) that is configured for removable attachment to the first lock portion (1124).

13. The fixing (202) of any one of claims 1 to 12, further comprising:
a shield portion (1200) configured to attach via a snap-fit connection to the elongated portion (210) to provide a shield for the cable connector (406).

14. The fixing (202) of any one of claims 1 to 13, wherein:
the first stop portion (228) extends from at least one of the top side (214) of the elongated portion (210) or the first cable support (222) and into the receiver portion (226), and
the second stop portion (230) extends from at least one of the top side (214) of the elongated portion (210) or the second cable support (224) and into the receiver portion (226).

15. The fixing (1402-1) of any one of claims 1 to 14, further comprising:
a T-shaped connector (1452-1) configured to extend from a first side of the elongated portion (210); and
a T-shaped receiver (1450-1) defined in an opposite second side of the elongated portion (210), wherein the T-shaped connector (1452-1) is configured to interlock with a T-shaped receiver (1450-2) of an adjacent second fixing (1402-2) to secure the fixing (1402-1) and the second fixing (1402-2) together in a side-by-side arrangement.
